# EUROPEAN PATENT APPLICATION

(11) **EP 4 183 891 A1**
(43) Date of publication of application: **24.05.2023**
(21) Application number: 21208782.9
(22) Date of filing: 17.11.2021
(51) Int. Cl.: C22B 3/04, C22B 3/00, C22B 7/00, C22B 26/00, H01M 10/54

(54) **FLUORIDE REMOVAL PROCESS**

(71) Applicant: Northvolt Revolt AB, 112 47 Stockholm (SE)
(72) Inventor: Alemrajabi, Mahmood, 112 47 Stockholm (SE); Eriksson, Maria, 112 47 Stockholm (SE); Jensen, Robert, 112 47 Stockholm (SE); Musfique, Ibrija, 112 47 Stockholm (SE); Tabuenca, Alejandro Gracia, 112 47 Stockholm (SE)
(74) Representative: AWA Sweden AB

(57) **Abstract**

The present disclosure relates to a process for removing fluoride from acidic solution, the process comprising a series of precipitation stages in which the pH is selectively increased using a neutralization agent.

## Description

### TECHNICAL FIELD

The present disclosure relates to a process for removing fluoride from acidic solution. The process may be part of a battery recycling process, and the acidic solution may be provided by liquid-phase acidic leaching of crushed batteries or battery materials.

### BACKGROUND

Rechargeable batteries, also referred to as secondary batteries, find widespread use as electrical power supplies and energy storage systems. As a result of the push from policymakers and global awareness, the number of electric vehicles worldwide will significantly increase in the next years and, as a consequence thereof, the number of secondary batteries will also significantly rise. Secondary batteries can be based on various technologies, for example the nickel-cadmium (NiCd) or the nickel metal hydride (NiMH) technology. In the transportation sector, secondary lithium-ion batteries (LIBs) have become the most popular power source. In LIBs, lithium composite oxides including lithium and metals nickel, cobalt and/or manganese (so-called "NCM metals") are typically used as active materials.

Recycling of batteries will become critically important to achieve economical and environmentally friendly production of batteries, because several of the chemical elements contained in batteries like LIBs, such as lithium, cobalt, nickel, aluminum, copper and manganese, are valuable, in particularly considering the increasing demand for electric vehicles and batteries on the one side, and the scarcity of resources on the other side. Hydrometallurgical recycling, which employs multi-step treatments and chemical process for extracting and recovering the valuable metals from batteries, including acid leaching of a feedstock including primarily size-reduced battery materials (so-called "black mass") and alternatively mixed hydroxide precipitate (MHP) or mixed sulfide precipitate (MSP) to get the valuable metals like Ni, Co and Mn dissolved in solution, is the most cost efficient and effective recycling method, and is also preferable from the viewpoint of environmental friendliness.

A battery cell, or simply "cell", in general comprises an anode, a cathode, a separator and an electrolyte. The electrolyte acts as a conductor allowing ions to move between the positive electrode (cathode) and the negative electrode (anode) and in the reverse in an oxidation and reduction reaction, respectively. LIBs are a type of rechargeable battery in which lithium ions move from the anode to the cathode during discharge. Furthermore, a battery cell typically comprises a casing for housing the electrodes, the separator and the electrolyte, current collectors or terminals and various safety devices, such as polymer gaskets, vents or valves. The positive terminal is connected to the cathode, for example by an aluminum tab, whereas the negative terminal is connected, for example by a copper tab, to the anode. Accordingly, batteries like LIBs comprise many different materials, in particular plastic and metal which make up the housing, the cathode and anode materials, the separator and the electrolyte. The electrolyte often contains fluoride. The common electrolyte salt used in LIBs is a fluoride containing salt, such as LiPF₆. This salt is ending up in the black mass after mechanical size-reduction of spent batteries and fed together with active materials and impurities to the recycling process. As this salt is soluble in acidic solution, fluoride is thereby introduced into the solution.

Removing fluoride is one of the biggest challenges in the hydrometallurgical process of battery recycling, because high level of fluoride concentration in the pregnant leach solution (PLS) will cause high demands in material selection of the process equipment, which has big consequences for both, capital expenditures (capex) and operating expenses (opex). Additionally, fluoride will form sparingly soluble salts, in particular with lithium (i.e., LiF), if not removed before the recovery of lithium. Formation of LiF in turn will reduce the quality of salts, such as Ni, Co and Mn salt(s), recovered in later stages of a recycling process. Thus, there is a demand for a process capable of significantly removing fluoride from acidic solution, which is capable to minimize environmental impact, opex and capex to an overall recycling process, in particular a battery recycling process, and to below a concentration that enables safe handling of the solution, such that a subsequent process for recovering the valuable materials can be run with no fluoride distraction.

### SUMMARY

In view of the above-outlined demand for a fluoride removing process, it is an object of the present disclosure to provide a simple and efficient process for removing fluoride from acidic solution,

Moreover, it is an object of the present disclosure to provide a simple and efficient process for removing fluoride from acidic leach solution provided by liquid-phase acidic leaching of crushed batteries or battery materials, and with minimized loss of valuable metals additionally contained in the solution, such as NCM metals.

In addition, it is an object of the present disclosure to provide a process for efficiently removing fluoride from acidic solution, which does not introduce any new chemical impurities to the system and which allows to transfer fluoride into neutral salts that are easy to handle and to discard.

Furthermore, it is an object of the present disclosure to provide a process for removing fluoride from acidic solution, which allows for minimizing opex and capex of a battery recycling process and is more environmentally friendly, and thus ensures economical and environmentally friendly production of lithium-ion secondary batteries.

One or more of these objects may be solved by a process for removing fluoride from acidic solution according to independent claim 1. Independent claim 1 and the dependent claims can be combined in any technologically suitable and sensible way, providing further embodiments of the invention.

In accordance with the present disclosure, there is provided a process for removing fluoride from acidic solution, wherein the process comprises:
a) providing a fluoride-containing acidic leachate;
b) a first precipitation stage of adjusting the pH of the leachate of step a) to 4 to 5 by addition of a neutralizing agent to form a first fluoride-containing precipitate, and separating the first fluoride-containing precipitate to obtain a first fluoride-reduced leachate;
c) a second precipitation stage of raising the pH of the first fluoride-reduced leachate to more than 5 to less than or equal to 6 by addition of a neutralizing agent to form a second fluoride-containing precipitate, and separating the second fluoride-containing precipitate to obtain a second fluoride-reduced leachate.

Applying a series of precipitation stages according to the process of the present disclosure, in which the pH of the acidic, fluoride-containing solution is successively increased by addition of a neutralizing agent, advantageously results in the formation of insoluble, neutral fluoride-containing salts which are easy to handle and can easily be separated and discarded, whereby the fluoride content is significantly reduced. The process disclosed herein advantageously allows for simple and efficient removal of fluoride from acidic solution, in particular acidic leach solution provided by liquid-phase acidic leaching of crushed batteries or battery materials, and with minimized loss of valuable metals that may additionally be contained in the solution, such as Ni, Co and Mn. Further advantageously according to the process of the present disclosure, efficient fluoride removal can be achieved by using agents, e.g., neutralizing agents, that do not introduce any new and unwanted chemical or metal impurities to the system. By this, a subsequent process for recovering valuable battery materials can be run with no fluoride distraction and with high yield. Hence, the process disclosed herein allows for minimizing opex and capex of a battery recycling process and for economical and environmentally friendly battery production.

### BRIEF DESCRIPTION OF THE DRAWINGS

Different aspects are now described with reference to the accompanying drawing. The accompanying drawing in the following description shows merely some embodiments of the present disclosure, and a person of ordinary skill in the art may still derive other embodiments from this accompanying drawing without creative efforts.

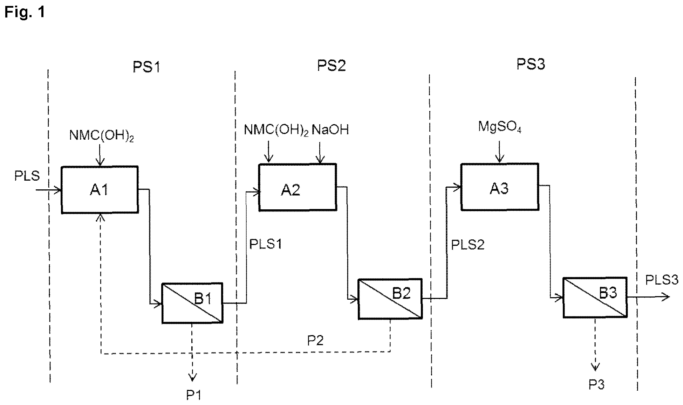

Fig. 1 is a schematic flowchart illustrating a process for removing fluoride from acidic solution according to an embodiment of the present disclosure, which includes three precipitation stages PS1, PS2 and PS3. In the first precipitation stage (PS1), in step A1 a fluoride-containing pregnant leach solution (PLS; pH about 0.5) provided from reductive acidic leaching of black mass is mixed with nickel manganese cobalt hydroxide (NMC(OH)₂) as neutralizing agent to increase the pH of the leach solution to 4 to 5 and to initiate precipitation. At least parts of the NMC(OH)₂ used in step A1 is recycled back from the second precipitation stage. In case the black mass is obtained from lithium-ion batteries, the PLS for example contains Ni, Mn, Co, Li and impurities Al, Cu, Fe, Zn, Mg, K, P and F, without being limited thereto. In filtration step B1, a precipitate (P1) formed in step A1, which mainly contains Fe(OH)₃, Al(OH)₃, Cu(OH)₃, NMC(OH)₂, MgF₂, AlFₓ complex, is then separated and discarded as process waste. The precipitation in the first precipitation stage may be performed in a series of reaction tanks cascading into each other giving a residence time of 2-6 hours at a temperature of 30-60°C. In the second precipitation stage (PS2), leach solution PLS1, which is obtained after separating precipitate P1 in the first precipitation stage and has a reduced fluoride concentration, is then mixed in step A2 with neutralizing agents NMC(OH)₂ and NaOH to further increase the pH to more than 5 to less than or equal to 6 to initiate precipitation. Another filtration step B2 is then performed to separate a precipitate (P2) formed, which mainly contains Al(OH)₃, Cu(OH)₃, MgF₂, AlFₓ complex and NMC(OH)₂. Precipitate P2 separated in step B2 may be isolated and recycled back to the first precipitation stage to reuse the co-precipitated NMC(OH)₂ as neutralizing agent in step A1. The precipitation in the second precipitation stage may be performed in a series of reaction tanks cascading into each other giving a residence time of 2-6 hours at a temperature of 30-60°C. In stage three of precipitation (PS3), leach solution PLS2, which is obtained after separating precipitate P2 in the second precipitation stage and has a further reduced fluoride concentration, is then mixed in step A3 with Mg(SO₄) as precipitation agent to further precipitate fluoride. A precipitate (P3) formed in step A3, which mainly contains MgF₂, is then separated in filtration step B3 and discarded as process waste. The precipitation in the third precipitation stage may be performed at a pH of more than 5 to less than or equal to 6, preferably the same pH as in step A2, in a series of reaction tanks cascading into each other giving a residence time of 2-6 hours and at a temperature of 30-60°C. Leach solution PLS3, which is obtained after separating P3 in the third precipitation stage and has a further reduced fluoride concentration, may then be subjected, for example, to subsequent, downstream processes for recovering the valuable battery materials including Ni, Mn, Co and Li.

### DETAILED DESCRIPTION

The technical solutions of the embodiments of this application will be described in more detail below with reference to the accompanying drawing. It is obvious that the embodiments to be described are a part rather than all of the embodiments of this application. The features of various embodiments can be combined to form further exemplary aspects of the present disclosure that may not be explicitly described or illustrated. All other embodiments obtained by persons of ordinary skill in the art based on the embodiments of the present invention without making creative efforts shall fall within the protection scope of the present invention. Further it is to be understood that the words and terms employed herein are used for describing specific embodiments only, and is not intended to be limiting, since the scope of the present invention is defined by the appended claims and equivalents thereof.

Disclosed herein is a process for removing fluoride from acidic solution, wherein the process comprises:
a) providing a fluoride-containing acidic leachate;
b) a first precipitation stage of adjusting the pH of the leachate of step a) to 4 to 5 by addition of a neutralizing agent to form a first fluoride-containing precipitate, and separating the first fluoride-containing precipitate to obtain a first fluoride-reduced leachate;
c) a second precipitation stage of raising the pH of the first fluoride-reduced leachate to more than 5 to less than or equal to 6 by addition of a neutralizing agent to form a second fluoride-containing precipitate, and separating the second fluoride-containing precipitate to obtain a second fluoride-reduced leachate.

In a preferred embodiment of the process of the present disclosure, the fluoride-containing acidic leachate or leach solution, which terms are used interchangeably herein, is provided by liquid-phase acidic leaching, in particular by liquid-phase acidic leaching of a fluoride-containing feedstock that mainly contains crushed batteries or battery material commonly referred to as "black mass". More preferably, the fluoride-containing feedstock is black mass. The black mass is preferably obtained from crushing lithium-ion batteries, in particular secondary lithium-ion batteries. However, the fluoride-containing feedstock may also be obtained from other sources, and may for example be a feedstock of fluoride-containing raw materials or recycled materials such as mixed hydroxide precipitate (MHP) and mixed sulfide precipitate (MSP), or a combination thereof, or a combination thereof with black mass.

Within the framework of this application, the term "battery" is intended to include a battery cell, a battery module, which typically contains a plurality of battery cells, and a battery pack, which typically contains a plurality of battery modules. Further, within the framework of this application, the term "battery" is intended to include both disposable and rechargeable batteries.

Crushing batteries is typically a process step in the recycling of batteries, which starts by sorting waste batteries according to their chemical composition, and then crushing or shredding them to obtain a size-reduced battery material. As indicated above, a battery comprises various materials, including plastics and metals that make up the battery housing, the separator, the cathode and anode materials, and an electrolyte. After crushing, a series of filtering and sieving steps are performed to separate plastic and metal shreds, finally resulting in the black mass as the product, which mainly contains electrolyte, cathode materials and anode materials. However, the composition of black mass typically varies depending on the battery type(s) used as a raw material and the chemicals contained therein, and because the sorting of the batteries is often difficult or neglected.

The terms "cathode material" and "cathode active material" are used interchangeably to describe the materials or metals which constitute the primary active component of the cathode. In lithium-ion batteries, lithium transition metal composite oxides including nickel (Ni), cobalt (Co) and/or manganese (Mn) (so-called "NCM metals") or lithium iron phosphate (LiFePO₄) are typically used as the cathode material. Common examples of lithium transition metal composite oxides are lithium cobalt oxide (LiCoO₂), lithium nickel oxide (LiNiO₂), lithium manganese oxide (LiMn₂O₄), lithium nickel cobalt oxide (LiNiₓCo₁₋ₓO₂ (0<x<1) or LiNi_{1-x-y}CoₓAl_{y}O₂ ((0<x≤0.2, 0<y≤0.1)) as well as lithium nickel cobalt manganese (NCM) oxide (LiNi_{i-x-y}CoₓMn_{y}O₂ (0<x+y<1)).

The terms "anode material" and "anode active material" are used interchangeably to describe the materials or metals which constitute the primary active component of the anode. Typically, lithium-ion batteries use graphite powder as an anode material. However, as used herein the term "anode material" should be understood to also comprise natural and artificial graphite, activated carbon, carbon black, conductive additives, lithium titanate (LTO), surface functionalized silicon, and high-performance powdered graphene.

The electrolyte of lithium-ion batteries is liquid and typically contains fluoride containing salts such as lithium hexafluorophosphate (LiPF₆), lithium tetrafluoroborate (LiBF₄), lithium trifluoromethanesulfonate (LiCF₃SO₃), lithium bis((bistrifluoromethanesulphonyl) (LiTFSI), or lithium fluoroalkylphosphates dissolved in an organic solvent, for example, mixtures of alkyl carbonates, e.g. C₁-C₆ alkyl carbonates such as ethylene carbonate (EC), ethyl methyl carbonate (EMC), dimethyl carbonate (DMC), diethyl carbonate (DEC), propylene carbonate (PC).

Accordingly, black mass obtained from crushing lithium-ion batteries typically contains, for example, about 28-40 wt.% Ni, Co and/or Mn, about 3-5 wt.% Li, about 30-40 wt.% graphite, about 2-5 wt.% of metallic impurities such as Al, Cu, Fe and/or Mg, about 1-2 wt.% organic compounds, about 1 wt.% of other impurities such as Ca, P, Si, Zn, K and Na, and about 1-2 wt.% fluoride.

Leaching of a fluoride-containing feedstock may be performed by any method known to the skilled person as being suitable for providing an acidic leachate, such as acidic leaching or acid roasting, without being limited thereto, but liquid-phase acid leaching using an acid or acidic solution as the solvent is preferred for providing the fluoride-containing acidic leachate.

By liquid-phase acidic leaching of a fluoride-containing feedstock, for example black mass, electrode materials, impurities and salts from the electrolyte are dissolved in solution, leaving behind graphite, plastic pieces, and undissolved metals as undissolved fraction. Accordingly, the leachate obtained by liquid-phase acidic leaching of black mass from crushed lithium-ion batteries may comprise lithium (Li) and valuable cathode materials nickel (Ni), cobalt (Co) and/or manganese (Mn) ("NCM metals") as the main components, and may additionally comprise - besides fluoride (F) - one or more of aluminum (Al), copper (Cu), iron (Fe), magnesium (Mg), calcium (Ca), phosphorus (P), silicon (Si), zinc (Zn), potassium (K) and sodium (Na) as undesired impurities, without being limited thereto. As indicated above, the respective amounts and concentrations of electrode materials and impurities in the leachate will vary depending on the composition of the black mass or the feedstock used for leaching, and the conditions applied during leaching.

According to a particularly preferred embodiment, which is especially suitable for leaching black mass, liquid-phase acidic leaching for providing the fluoride-containing acidic leachate is performed at atmospheric pressure using sulfuric acid (H₂SO₄) and hydrogen peroxide (H₂O₂) as a reducing agent.

In embodiments, the acidic leachate provided typically has a pH below 1.5, for example below 1, and preferably below 0.5, for example from about pH 0.3-0.5.

According to the process of the present disclosure, a first precipitation stage b) is performed, in which the pH of the fluoride-containing acidic leachate of step a) is adjusted to 4 to 5 by addition of a neutralizing agent to form a first fluoride-containing precipitate, and the first fluoride-containing precipitate is then separated to obtain a first fluoride-reduced leachate. More preferably, in the first precipitation stage the pH of the leachate is adjusted to 4.2 to 4.7. By adjusting the pH to be within this range, maximum precipitation yield of F and undesired impurities such as Fe or Al can be ensured, while at the same time a minimum amount of valuable metals such as Ni, Co, Mn is co-precipitated. The amount of loss of valuable metals can thus be minimized.

That is, in the first precipitation stage, the pH of the leach solution is increased to a pH of 4 to 5, preferably to 4.2 to 4.7, using a neutralizing agent to initiate precipitation, and the precipitate formed is then separated. Because of the increase in pH and the associated change in the solubilities and complexation reactions, fluoride can be precipitated from the solution as insoluble salt until a specific saturation level is reached, leaving behind as supernatant a leachate with reduced fluoride concentration. It should be understood that not only fluorine salts are precipitated, but insoluble salts of other cations and anions which may additionally be contained and dissolved in the acidic leachate may be precipitated or co-precipitated. Accordingly, the first fluoride-containing precipitate may not only consist of fluorine salt(s), but may be a precipitate or co-precipitate of fluorine salt(s) and one or more additional salts. For example, in the specific pH range set in the first precipitation stage b), precipitation of Fe, Al, Cu, Ni, Co and Mn may additionally occur, if present, in particular as insoluble hydroxides or phosphates, whereas F may for example precipitate as magnesium fluoride (MgF₂), calcium fluoride (CaF₂) and/or aluminum fluoride (AlFₓ) complex depending on the cations present in the leachate.

Therefore, it is preferable according to the process of the present disclosure that the fluoride-containing acidic leachate provided in step a), or the fluoride-containing feedstock or black mass used for providing the acidic leachate in step a), already contains metal cations that form insoluble salts with fluoride, in particular one or more of Ni, Mn, Co, Al, Na and Mg. Alternatively, one or more of such metal cations may be separately added to the acidic solution in the form of, for example, the neutralizing agent.

The neutralizing agent used in the first precipitation stage is preferably selected from sodium hydroxide (NaOH), lithium hydroxide (LiOH), potassium hydroxide (KOH), ammonium hydroxide (NH₄OH), lithium carbonate (Li₂CO₃), nickel hydroxide (Ni(OH)₂), manganese hydroxide (Mn(OH)₂), cobalt hydroxide (Co(OH)₂, nickel cobalt manganese hydroxide NiCoMn(OH)₂, and a mixture of one or more thereof. By using these neutralizing agents, introduction of any new metal impurities to the leach solution advantageously may be avoided.

More preferably, the neutralizing agent used in the first precipitation stage at least comprises one or more of nickel hydroxide (Ni(OH)₂), manganese hydroxide (Mn(OH)₂), cobalt hydroxide (Co(OH)₂) and nickel cobalt manganese hydroxide (NiCoMn(OH)₂). Using any one of these neutralizing agents is advantageous, because the loss of valuable NCM metals Ni, Co and Mn can be reduced, in particular, if NCM metals are initially contained in the leach solution of step a), e.g., after liquid-phase acidic leaching of the feedstock, and if the NCM hydroxides used as neutralizing agent in this step themselves are recycled materials.

In a preferred embodiment of the process of the present disclosure, in the first precipitation stage b) one or both of phosphoric acid (H₃PO₄) and potassium silicate (K₂SiO₃) is additionally added to the leachate, besides the neutralizing agent. By addition of phosphoric acid (H₃PO₄), iron (Fe) and aluminum (Al) can be precipitated more efficiently, since Fe and Al have low solubility as phosphates in their trivalent state. The precipitation of Fe and Al as phosphates may be advantageous compared to the precipitation in the form of hydroxides, as Al and Fe hydroxides tend to absorb NCM metals and lithium. Further, Al and Fe phosphates may be easier to separate, e.g. by filtration, and to wash than the corresponding hydroxides, thereby facilitating recovery. Through the addition of potassium silicate (K₂SiO₃), fluoride precipitation can be increased in the form of potassium fluorosilicate (K₂(SiF₆)), which has low solubility and can be easily separated and discarded.

In a preferred embodiment of the process of the present disclosure, the first precipitation stage is performed at a temperature in the range of 30°C to 60°C, more preferably 40°C to 50°C. Within this temperature range, efficiency of the precipitation can be increased.

In a further preferred embodiment of the process of the present disclosure, the first precipitation stage has a residence time of 2 to 12 hours, more preferably 2 to 6 hours, and even more preferably 3 to 5 hours. This advantageously allows a high amount of precipitate to be formed.

That is, in the process of the present disclosure, the temperature during precipitation in the first precipitation stage is preferably controlled to be in the range of 30°C to 60°C, more preferably 40°C to 50°C. Alternatively or additionally, preferably additionally, the residence time for precipitation in the first precipitation stage is preferably set to 2 to 12 hours, more preferably 2 to 6 hours, and even more preferably 3 to 5 hours. As temperature and time correlate, i.e., if the temperature is higher, residence time will become shorter and vice versa, an optimal relationship between precipitation efficiency and energy consumption can be adjusted.

Separation of the first fluoride-containing precipitate may be performed by any method known to a person skilled in the art. For example, the first fluoride-containing precipitate may be separated from the leachate by filtration using a filter, a centrifuge or a cyclone. The separated precipitate may be discarded as waste, or may be isolated and washed, for example with water, for further recovery of the metals contained therein.

According to the process of the present disclosure, a second precipitation stage c) is performed, in which the pH of the first fluoride-reduced leachate of step b) is raised to more than 5 to less than or equal to 6 by addition of a neutralizing agent to form a second fluoride-containing precipitate, and the second fluoride-containing precipitate is then separated to obtain a second fluoride-reduced leachate. More preferably, in the second precipitation stage the pH of the first fluoride-reduced leachate is adjusted to 5.3 to 5.7. By adjusting the pH to be within this range, the concentration of undesired impurities such as Fe or Al in the leachate can be further decreased.

That is, in the second precipitation stage, the pH of the first fluoride-reduced leachate obtained from the first precipitation stage is further increased to a pH in the range of more than 5 to less than or equal 6, preferably to 5.3 to 5.7, using a neutralizing agent to initiate further precipitation. Because of the further increase in pH and the associated change in the solubilities and complexation reactions, fluoride can be further precipitated from the solution in the form of insoluble salt(s) until a specific saturation level is reached, leaving behind as supernatant the second fluoride-reduced leachate with further reduced fluoride concentration. Again, it should be understood that not only fluorine salts are precipitated in the second precipitation stage c), but insoluble salts of other cations and anions which may additionally be contained and dissolved in the leachate may be precipitated or co-precipitated. Accordingly, also the second fluoride-containing precipitate may not only consist of fluorine salt(s), but may be a precipitate or co-precipitate of fluorine salt(s) and one or more additional salts. For example, in the specific pH range set in the second precipitation stage c), precipitation of Fe, Al, Cu, Ni, Co and Mn may additionally occur, if present, in particular as insoluble hydroxides, whereas F may for example precipitate as magnesium fluoride (MgF₂), calcium fluoride (CaF₂) and/or aluminum fluoride (AlFₓ) complex depending on the cations present in the leachate.

The neutralizing agent used in the second precipitation stage is preferably selected from sodium hydroxide (NaOH), lithium hydroxide (LiOH), potassium hydroxide (KOH), ammonium hydroxide (NH₄OH), lithium carbonate (Li₂CO₃), nickel hydroxide (Ni(OH)₂), manganese hydroxide (Mn(OH)₂), cobalt hydroxide (Co(OH)₂, nickel cobalt manganese hydroxide NiCoMn(OH)₂, and a mixture of one or more thereof, and more preferably is selected from NaOH, Li₂CO₃, Ni(OH)₂, Mn(OH)₂, Co(OH)₂, NiCoMn(OH)₂, and a mixture of one or more thereof. By using these neutralizing agents, introduction of any new metal impurities to the leach solution advantageously can be avoided.

The neutralizing agents used in the first and second precipitation stage can be independently selected. That is, the neutralizing agent used in the second precipitation stage may be identical to or different from the neutralizing agent used in the first precipitation stage.

In a further preferred embodiment of the process of the present disclosure, the neutralizing agent used in the second precipitation stage at least comprises one or more of nickel hydroxide (Ni(OH)₂), manganese hydroxide (Mn(OH)₂), cobalt hydroxide (Co(OH)₂) and nickel cobalt manganese hydroxide (NiCoMn(OH)₂). Using any one of these neutralizing agents is advantageous, because the loss of valuable NCM metals Ni, Co and Mn can be reduced, in particular, if NCM metals are already contained in the leach solution.

In embodiments of the process of the present disclosure, in the second precipitation stage c) one or both of sodium hydroxide (NaOH) and lithium carbonate (Li₂CO₃) is added to the first fluoride-reduced leachate as a neutralizing agent, in addition to the one or more of NiCoMn(OH)₂, Ni(OH)₂, Mn(OH)₂, and Co(OH)₂, in order to increase precipitation efficiency.

In a preferred embodiment of the process of the present disclosure, the second precipitation stage is performed at a temperature in the range of 30°C to 60°C, more preferably 40°C to 50°C. Within this temperature range, efficiency of the precipitation in the second precipitation stage can be increased, and at the same time crystallization of salts of Ni, Mn and/or Co can be inhibited.

In a further preferred embodiment of the process of the present disclosure, the second precipitation stage has a residence time of 2 to 12 hours, more preferably 2 to 6 hours, and even more preferably 3 to 5 hours. This advantageously allows a high amount of precipitate to be formed in the second precipitation stage.

That is, in the process of the present disclosure, the temperature during precipitation in the second precipitation stage is preferably controlled to be in the range of 30°C to 60°C, more preferably 40°C to 50°C. Alternatively or additionally, preferably additionally, the residence time for precipitation in the second precipitation stage is preferably set to 2 to 12 hours, more preferably 2 to 6 hours, and even more preferably 3 to 5 hours. As temperature and time correlate, i.e., if the temperature is higher, residence time will become shorter and vice versa, an optimal relationship between precipitation efficiency and energy consumption can be adjusted in the second precipitation stage.

However, temperature and residence time in the first and second precipitation stage can be independently selected. This means, temperature and residence time set in the second precipitation stage may be identical to or different from the temperature and residence time set in the first precipitation stage.

Separation of the second fluoride-containing precipitate may be performed by any method known to a person skilled in the art. For example, the second fluoride-containing precipitate may be separated from the first fluoride-reduced leachate by filtration using a filter, a centrifuge or a cyclone. The separated second fluoride-containing precipitate may be discarded as waste, or may be isolated and washed, for example with water, for further recovery of the metals contained therein. Alternatively, however, the isolated second fluoride-containing precipitate may be recycled back to the first precipitation stage, at least in parts. As mentioned above, there may be a significant amount of co-precipitation of Ni, Co and Mn as hydroxide due to the increased pH in the second precipitation stage, and/or a significant amount of undissolved NMC hydroxide neutralization agent due to slow kinetics at the higher pH applied in the second precipitation stage. Accordingly, the isolated second fluoride-containing precipitate may contain a significant amount of NMC hydroxide, and may, without further washing or separation of the NMC hydroxide, at least in parts, but preferably entirely, circulated back to the first precipitation stage as neutralizing agent in order to recover the NMC content and to reduce the loss of NCM metals.

Therefore, in a further preferred embodiment, the process of the present disclosure further comprises a step d) of recycling the separated second fluoride-containing precipitate back to the first precipitation stage.

The second fluoride-reduced leachate obtained from the second precipitation stage may be directly used and fed, for example, to subsequent downstream processes for recovering valuable battery materials. However, since some fluoride-containing complexes such as AlFₓ tend to decompose and release F due to pH increase in the second precipitation stage, thereby leaving behind free F ions in the leachate, the second fluoride-reduced leachate may alternatively be subjected to a further precipitation stage in order to further precipitate F in a less soluble form, if desired. By this, the concentration of fluoride in the leach solution can be further reduced.

Therefore, according to an embodiment the process of the present disclosure further comprises a third precipitation stage. Preferably, in the third precipitation stage an alkaline earth metal salt is added to the second fluoride-reduced leachate to precipitate an inorganic fluorine compound, which is then separated to obtain a third fluoride-reduced leachate

Further preferably according to this embodiment, the alkaline earth metal salt is added at a concentration range of 100 to 240 g/L in order to initiate precipitation of the inorganic fluorine compound and to reduce the fluoride concentration further.

Further preferably according to this embodiment, the alkaline earth metal salt is a magnesium salt, such as magnesium sulfate (MgSO₄) or magnesium carbonate (MgCO₃), to precipitate fluoride as sparingly soluble magnesium fluoride (MgF₂). Accordingly, the inorganic fluorine compound precipitated according to this embodiment is MgF₂, which is advantageous, as it can be easily separated and discarded from the leach solution.

Further preferably according to this embodiment, the pH of the second fluoride-reduced leachate is maintained in the third precipitation stage. In other words, the pH of the second fluoride-reduced leachate in the third precipitation stage is adjusted to be the same as in the second precipitation step. By this, unwanted precipitation or co-precipitation of, for example, NCM metals can be prevented.

Further preferably according to this embodiment of the process of the present disclosure, the third precipitation stage is performed at a temperature in the range of 30 to 60°C, more preferably 40°C to 50°C. Within this temperature range, efficiency of the precipitation of the inorganic fluorine compound can be increased, and at the same time crystallization of salts of Ni, Mn and/or Co can be inhibited.

Further preferably according to this embodiment, the third precipitation stage has a residence time of 2 to 12 hours, more preferably 2 to 6 hours, and even more preferably 3 to 5 hours. This advantageously allows a high amount of precipitate to be formed in the third precipitation stage.

That is, in this embodiment of the process of the present disclosure, the temperature during precipitation in the third precipitation stage is preferably controlled to be in the range of 30°C to 60°C, more preferably 40°C to 50°C. Alternatively or additionally, preferably additionally, the residence time for precipitation in the third precipitation stage is preferably set to 2 to 12 hours, more preferably 2 to 6 hours, and even more preferably 3 to 5 hours. As temperature and time correlate, i.e., if the temperature is higher, residence time will become shorter and vice versa, an optimal relationship between precipitation efficiency and energy consumption can be adjusted in the third precipitation stage.

Separation of the precipitated inorganic fluorine compound may be performed by any method known to a person skilled in the art. For example, the precipitated inorganic fluorine compound may be separated from the second fluoride-reduced leachate by filtration using a filter or sieve. The isolated inorganic fluorine compound may then be discarded as waste.

In the third precipitation stage, the concentration of residual fluoride in the leachate obtained is even further reduced to a specific saturation level, which depends on the pH of the leachate and the concentration of other ions in the leachate.

The thus obtained third fluoride-reduced leachate may be directly used and fed, for example, to subsequent downstream processes for recovering valuable battery materials.

The process disclosed herein therefore advantageously allows for simple and efficient removal of fluoride from acidic solution, in particular acidic leach solution, to below a concentration that enables safe handling of the solution, and with minimized loss of valuable electrode materials that may additionally be contained in the leach solution, for example NCM metals. Hence, a subsequent process for recovering battery materials can be run with no fluoride distraction and with high yield. In addition, the process disclosed herein advantageously does not introduce any new chemical or metal impurities to the system, but still allows for transferring fluoride into neutral salts which are easy to handle and to discard. The process disclosed herein thus allows for minimizing opex and capex of a battery recycling process and enables economical and environmentally friendly battery production.

Without further elaboration, it is believed that a person skilled in the art can, using the present description including the accompanying drawing, utilize the present invention to its fullest extent. Although the invention has been described herein with regard to its preferred embodiments, which represent the best mode for carrying out the invention, it is understood that various changes as would be obvious to one of ordinary skill in this art can be made without departing from the spirit and scope of the disclosure, which is set forth in the appended claims.

## Claims

1. Process for removing fluoride from acidic solution, wherein the process comprises:
a) providing a fluoride-containing acidic leachate ;
b) a first precipitation stage of adjusting the pH of the leachate of step a) to 4 to 5 by addition of a neutralizing agent to form a first fluoride-containing precipitate, and separating the first fluoride-containing precipitate to obtain a first fluoride-reduced leachate;
c) a second precipitation stage of raising the pH of the first fluoride-reduced leachate to more than 5 to less than or equal to 6 by addition of a neutralizing agent to form a second fluoride-containing precipitate, and separating the second fluoride-containing precipitate to obtain a second fluoride-reduced leachate.

2. Process according to claim 1, wherein in the first precipitation stage the pH of the leachate is adjusted to 4.2 to 4.7.

3. Process according to claim 1 or 2, wherein in the second precipitation stage the pH of the first fluoride-reduced leachate is adjusted to 5.3 to 5.7.

4. Process according to any one of claims 1 to 3, wherein the neutralizing agent in the first and in the second precipitation stage is, identically or differently, selected from NaOH, LiOH, KOH, NH₄OH, Li₂CO₃, Ni(OH)₂, Mn(OH)₂, Co(OH)₂, NiCoMn(OH)₂, and a mixture of one or more thereof.

5. Process according to any one of claims 1 to 4, wherein the neutralizing agent in the first and in the second precipitation stage, identically or differently, at least comprises one or more of Ni(OH)₂, Mn(OH)₂, Co(OH)₂ and NiCoMn(OH)₂.

6. Process according to any one of claims 1 to 5, wherein in the first precipitation stage, one or both of H₃PO₄ and K₂SiO₃ is additionally added to the leachate.

7. Process according to any one of claims 1 to 6, wherein the first and the second precipitation stages are each independently performed at a temperature in the range of 30 to 60°C.

8. Process according to any one of claims 1 to 7, wherein the first and the second precipitation stages each independently have a residence time of 2 to 12 hours.

9. Process according to any one of claims 1 to 8, wherein the process further comprises:
d) recycling the separated second fluoride-containing precipitate back to the first precipitation stage.

10. Process according to any one of claims 1 to 9, further comprising a third precipitation stage of adding an alkaline earth metal salt to the second fluoride-reduced leachate to precipitate an inorganic fluorine compound, and separating the precipitated inorganic fluorine compound to obtain a third fluoride-reduced leachate.

11. Process according to claim 10, wherein the alkaline earth metal salt is added at a concentration range of 100 to 240 g/L.

12. Process according to claim 10 or 11, wherein the alkaline earth metal salt is a magnesium salt, preferably MgSO₄ or MgCO₃, and the inorganic fluorine compound is MgF₂.

13. Process according to any one of claims 10 to 12, wherein the pH of the second fluoride-reduced leachate is maintained in the third precipitation stage.

14. Process according to any one of claims 10 to 13, wherein the third precipitation stage is performed at a temperature in the range of 30 to 60°C.

15. Process according to any one of claims 10 to 14, wherein the third precipitation stage has a residence time of 2 to 12 hours.
